# EUROPEAN PATENT APPLICATION

(11) **EP 4 751 837 A1**
(43) Date of publication of application: **03.06.2026**
(21) Application number: 24215824.4
(22) Date of filing: 27.11.2024
(51) Int. Cl.: B23K 20/12, H01R 43/02, B23K 20/26, B23K 101/38, B23K 103/10, B23K 103/18

(54) **METHOD OF JOINING CONDUCTORS BY FRICTION STIR WELDING**

(71) Applicant: NKT HV Cables AB, 371 60 Lyckeby (SE)
(72) Inventor: SINGH, Sukhdeep, Trollhättan (SE); JÄDERBERG, Johan, Lyckeby (SE); IGESTRAND, Mattias, Trollhättan (SE); PATEL, Vivek, Trollhättan (SE)
(74) Representative: Kransell & Wennborg KB

(57) **Abstract**

Method of joining a first conductor (1) of a power cable with an essentially cylindrical metal element (7), the method comprising: a) arranging an end section of the first conductor (1) and a portion of the metal element (7) in a metal fixture (3), b) penetrating the metal fixture (3) with a rotating friction stir welding, FSW, tool (5), c) moving the rotating FSW tool (5), while penetrating the metal fixture (3), towards and through an interface (9) between the end section of the first conductor (1) and the metal element (7), joining the end section, the metal element (7), and the metal fixture, and d) removing excess metal fixture material from the joined end section and metal element (7) to obtain an FSW joint between the first conductor (1) and the metal element (7).

## Description

### TECHNICAL FIELD

The present disclosure generally relates to power cables. In particular, the present disclosure relates to jointing and repairing of conductors of power cables.

### BACKGROUND

Power cables often require jointing. For example, two cable lengths may be joined to obtain a longer total cable length. In the process of jointing, the conductors of the two cables are joined to obtain a conductor joint, followed by a restoration of the layers surrounding the conductors, including the insulation system, over the conductor joint.

The conductor joint may for example be obtained by Tungsten Inert Gas (TIG) or Metal Inert Gas (MIG) welding of the two conductor ends to be joined. The conductor material is as a result subjected to multiple melting and solidification cycles. Besides the risk of defect formation, such as cracks, pores, lack of fusion, and oxides in the fusion zone, it is common that the heat affected zone (HAZ) adjacent to the fusion zone is softened. This means that the HAZ may have lower mechanical properties in comparison to the parent material.

### SUMMARY

In view of the above an object of the present disclosure is to provide a method of joining a first conductor of a power cable with an essentially cylindrical metal element, which solves or at least mitigates the problems of the prior art.

There is hence according to a first aspect of the present disclosure provided a method of joining a first conductor of a power cable with an essentially cylindrical metal element, the method comprising: a) arranging an end section of the first conductor and a portion of the metal element in a metal fixture, b) penetrating the metal fixture with a rotating friction stir welding, FSW, tool, c) moving the rotating FSW tool, while penetrating the metal fixture, towards and through an interface between the end section of the first conductor and the metal element, joining the end section, the metal element, and the metal fixture, and d) removing excess metal fixture material from the joined end section and metal element to obtain an FSW joint between the first conductor and the metal element.

Friction stir welding is a solid-state welding method performed at a significantly lower temperature than TIG/MIG welding. As a result, the HAZ softening is less pronounced. Moreover, as the welding occurs in solid state, there is no risk of crack or pore formation. The mechanical properties of the FSW joint may thus be improved. Preliminary tests performed by the applicant indicate a 25% reduction of hardness of the FSW joint.

A further advantage is that the welding time is reduced. The welding time may be as low as 1 minute. Moreover, the possibility to mechanise the process reduces the risk of human error.

FSW is furthermore versatile because it can be applied to aluminium, copper, and for welding copper to aluminium.

One general drawback with friction stir welding is that it leaves a pinhole at the end of the weld run. However, with the present method, after welding, the excess material containing the pinhole is removed in step e). Thus, no pinhole is left on the FSW joint.

The purpose of the metal fixture is also to rigidly hold the end section of the first conductor and the essentially cylindrical metal element. Bending of strands of the first conductor may thus be avoided. Additionally, the metal fixture may be used as a filler material.

The first conductor may be a stranded conductor.

The method may be used both for preparing a new joint or for repairing an existing conductor joint.

The power cable may be a submarine power cable or an underground cable. Due to the higher mechanical strength of the FSW joint, a submarine power cable comprising only FSW joints may beneficially be used for deep-sea installation, i.e., for installation depths of 1000 m or more than 1000 m, such as installation depths of 2000 m or more, such as 3000 m or more.

The power cable may be a medium voltage or a high voltage power cable. With high voltage is herein meant a nominal voltage of at least 72 kV.

The power cable may be an AC power cable or a DC power cable.

The power cable may be a single core or a multi-core power cable. In the case of a multi-core power cable, FSW joints according to the present method may be performed for all cores.

According to one example, the first conductor may consist of or comprise a metal selected from Al 1000 series, Al 6000 series, Al 8000 series, or an Al-Zr alloy. Some specific Al xooo series examples are 1070, 1100, 1110, 1350, 1370, 1450, 6060, 6082, 6101, 6201, 8030, 8176.

According to one example, the metal element may consist of or comprise a metal selected from Al 1000 series, Al 6000 series, Al 8000 series, or an Al-Zr alloy. Some specific Al xooo series examples are 1070, 1100, 1110, 1350, 1370, 1450, 6060, 6082, 6101, 6201, 8030, 8176.

According to one example, the first conductor may comprise or consist of copper or a copper alloy such as Cu-ETP, Cu-OF, CuZn, CuSn, CuSi, CuSiMn, CuSiNi, CuNiMn, CuCrZr, CuMiSiCr.

According to one example, the metal element may comprise or consist of copper or a copper alloy such as Cu-ETP, Cu-OF, CuZn, CuSn, CuSi, CuSiMn, CuSiNi, CuNiMn, CuCrZr, CuMiSiCr.

According to one example, the metal fixture may comprise or consist of a metal selected from Al 1000 series, Al 2000 series, Al 3000 series, Al 6000 series, Al 8000 series, or an Al-Zr alloy. Some specific Al xooo series examples are 1070, 1100, 1110, 1350, 1370, 1450, 6060, 6082, 6101, 6201, 8030, 8176.

According to one example, the metal fixture may comprise or consist of copper or a copper alloy such as Cu-ETP, Cu-OF, CuZn, CuSn, CuSi, CuSiMn, CuSiNi, CuNiMn, CuCrZr, CuMiSiCr.

According to one embodiment in step e) the excess material is removed by cutting, grinding, and polishing.

The obtained FSW joint may have a cylindrical or essentially cylindrical shape over the weld nugget, which is a section of joined material composed of the remaining metal fixture material, the first conductor and the metal element.

According to one embodiment the FSW joint has an essentially cylindrical shape.

According to one embodiment in step d) the FSW tool moves through the interface in a direction that is at essentially a right angle with a longitudinal axis of the first conductor.

One embodiment comprises prior to step d) raising the FSW tool from the metal fixture at a distance from the joined first conductor and the metal element. The pinhole will thus be created at a distance from the to be completed FSW joint.

In one example, the FSW tool may be stopped from rotating prior to step d).

According to one embodiment the metal element is a second conductor of a second power cable, and wherein the FSW joint is an FSW conductor joint.

According to one embodiment the metal fixture and the first conductor are made of the same material.

According to one embodiment the metal fixture comprises a different material of higher mechanical strength and/or higher electrical conductivity than the first conductor. The metal fixture is in this case thus used for "alloying" the FSW joint to achieve better mechanical and/or electrical conductive properties.

One embodiment comprises, prior to step a) drilling holes in the end section and filling the holes with a filler material. This may improve electrical conductivity and/or the mechanical properties of the FSW joint.

The filler material may for example be or comprise wires, plates or a powder composed of for example a metal powder and carbon nanotubes, e.g., aluminium powder and carbon nanotubes or copper powder and carbon nanotubes, or a metal powder mixed with graphene, for example aluminium powder or copper powder mixed with graphene.

One embodiment comprises prior to step a) arranging an end face of the end section and an end face of the metal element spaced apart with a gap, and filling the gap with a filler material.

According to one embodiment the filler material has a higher mechanical strength and/or higher electrical conductivity than a material of the first conductor.

According to one embodiment the first conductor comprises a first material and the metal element comprises a second material different from the first material.

According to one embodiment the metal fixture comprises a first member that clamps the first conductor, and a second member that clamps the metal element, wherein the first member is made of a metal of the same type as first material, and the second member is made of a metal of the same type as the second material.

According to one embodiment the first material is an aluminium grade, and the second material is a copper grade.

The first member may be made of an aluminium grade, which is the same as or different from the first material.

The second member may be made of a copper grade, which is the same as or different from the second material.

There is according to a second aspect of the present disclosure provided an FSW joint obtainable by means of the method of the first aspect.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1A is a schematic cross-section transverse to a longitudinal axis of a first conductor of an assembly including the first conductor and a metal fixture;
Fig. 1B is a sectional view along lines A-A in Fig. 1A, with an FSW tool above the assembly;
Fig. 1C is a top view of the assembly in Fig. 1A after FSW;
Fig. 1D shows a sideview of an FSW joint;
Fig. 2 depicts another example of an assembly in the process of making an FSW joint;
Fig. 3A shows yet another example of an assembly in the process of making an FSW joint;
Fig. 3B is a sideview of the FSW joint created from the FSW example in Fig. 3A;
Fig. 4A depicts another example of an assembly in the process of making an FSW joint;
Fig. 4B is a sideview of the FSW joint created from the FSW example in Fig. 4A;
Fig. 5 shows an example of repairing a joint by means of FSW;
Fig. 6 is a longitudinal section of an example of a power cable with an FSW joint; and
Fig. 7 is a flowchart of joining a first conductor of a power cable with an essentially cylindrical metal element.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

A power cable as discussed herein may typically comprise one or more conductors. Each conductor may be a solid conductor or a stranded conductor, e.g., a round stranded conductor, segmented/Milliken conductor, a keystone conductor, or a compacted conductor.

The power cable furthermore comprises at least one insulation system, each insulation system surrounding a respective one of the conductors. Each insulation system comprises an inner semiconductive layer, or conductor screen, an insulation layer arranged radially outside of the inner semiconductive layer, and an outer semiconductive layer, or insulation screen.

Additional layers are provided outside the insulation system, for example two or more of the following: a bedding layer, a screen layer, a radial water barrier such as a longitudinally welded metal sheath or an extruded sheath, an armour bedding layer, one or more armour layers, and/or an outer sheath or an outer serving.

The present disclosure concerns joining of the conductors of two lengths of power cables by means of friction stir welding. The joining may be a jointing of the two conductors, or it may a repair of an existing conductor joint.

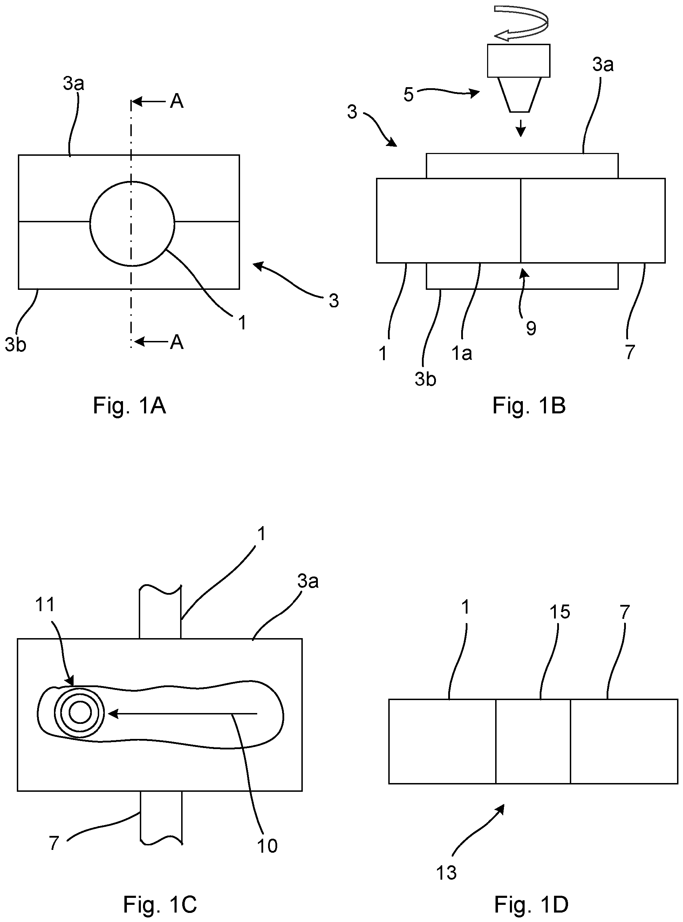

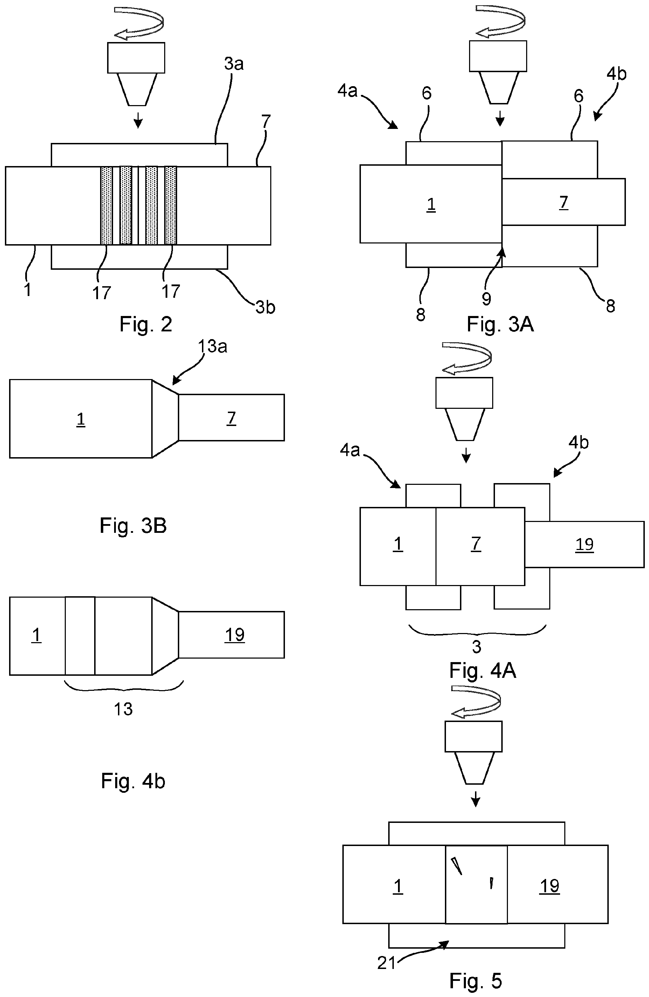

Examples of a method of joining a first conductor of a power cable with an essentially cylindrical metal element will now be described in more detail with reference to Figs 1A - Fig. 5, and Fig. 7. Figs 1A - Fig 4b show examples in which an FSW joint between two conductors of a respective power cable length is made by means of friction stir welding. Fig. 5 is an example of repairing a damaged existing conductor joint by friction welding to obtain an FSW joint.

The example in Fig. 1A depicts a first conductor 1 of a power cable, arranged in a metal fixture 3. Fig. 1B shows a section along lines A-A in Fig. 1A. Here, the essentially cylindrical metal element 7 can also be seen.

The metal fixture 3 forms part of a welding assembly that includes a friction stir welding tool 5, seen in Fig. 1B. The metal fixture 3 may be made of the same material as the first conductor 1 and the metal element 7, or of a different material. In the example in Figs 1A-1D, the first conductor 1 and the metal element 7 may both be made of copper, a copper alloy, aluminium, or an aluminium alloy. For example, if the first conductor 1 and the metal element 7 are made of aluminium, the metal fixture 3 may also be made of aluminium of either the same grade or of a different grade than the aluminium material of the first conductor 1 and the metal element 7.

In general, if the metal fixture 3 is made of a different material than the first conductor 1 and/or the metal element 7, the material of the metal fixture 3 may have a higher mechanical strength and/or a higher electrical conductivity than the first conductor 1 and/or the metal element 7.

In one example, the first conductor 1 and the metal element 7 may be made of aluminium such as Al 1050, and the metal fixture 3 may be made of 1050 aluminium too.

In another example, the first conductor 1 and the metal element 7 may be made of aluminium such as Al 1000 series, Al 6000 series or Al 8000 series, an Al-Zr alloy, or copper or a copper alloy such as Cu-ETP, Cu-OF, CuZn, CuSn, CuSi, CuSiMn, CuSiNi, CuNiMn, CuCrZr, CuMiSiCr.

The metal fixture 3 comprises a first clamping member 3a and a second clamping member 3b. Each of the first clamping member 3a and the second clamping member 3b may have a respective channel arranged to receive the first conductor 1 and the metal element 7. When the first clamping member 3a is properly placed on the second clamping member 3b the two channels are aligned and form a through-opening which in a straight line extends through the metal fixture 3.

According to the method, in a step a) an end section of the first conductor 1 and a portion of the metal element 7 are arranged in the metal fixture 3.

The first conductor 1 and the portion of the metal element 7 may be arranged in the channel of the second clamping member 3b, which is the lower part of the metal fixture 3. The first clamping member 3a may then be placed on top of the second clamping member 3b with its channel receiving an upper portion of the first conductor 1 and the metal element 7. The first clamping member 3a and the second clamping member 3b may then be fixed to each other to prevent relative movement between the first clamping member 3a and the second clamping member 3b during friction stir welding, which will be described in more detail in the following.

According to the example shown in Figs 1A-1D, the metal element 7 is a second conductor of a second power cable. Step a) in this case comprises placing the end faces of the first conductor 1 and the metal element 7 in the form of a second conductor facing each other in the channel of the second clamping member 3b.

In a step b) the rotating FSW tool 5 penetrates the metal fixture 3. The heat caused by the rotation of the FSW tool 5 causes the metal fixture 3 to soften but not to melt. The rotating FSW tool 5 can thus penetrate the metal fixture 3.

The FSW tool 5 may penetrate the metal fixture 3 from above. The rotating FSW tool 5 may be lowered vertically from above the metal fixture 3 until it penetrates both the first clamping member 3a and the second clamping member 3b.

In a step c) the rotating FSW tool 5 is moved along the metal fixture 3 while penetrating the metal fixture 3. In step c) both the first clamping member 3a and the second clamping member 3b are being penetrated by the FSW tool 5. The rotating FSW tool 5 is moved towards and through an interface 9 between the end section of the first conductor 1 and the metal element 7. The end section of the first conductor 1, the metal element 7, and the metal fixture 3 are thus joined.

An example of the route travelled by the FSW tool 5 in step c) while penetrating the metal fixture 7 is shown in the top view of the metal fixture 7 in Fig. 1C. The route, indicated by arrow 10, may be essentially perpendicular to the longitudinal axis of the first conductor 1. The route begins at one side of the first conductor 1 and the metal element 7 and goes through the first conductor 1 and the metal element 7, to the other side of the first conductor 1 and the metal element 7. The rotating FSW tool 5 contacts the end section of the first conductor 1, the metal element 7, and the metal fixture 3 as it moves from its initial position where it first penetrates the metal fixture 3 to its final position, where it is raised from the metal fixture 3. This leaves the pinhole 11 in the metal fixture 3 at the position where the FSW tool 5 was raised from the metal fixture 3. The pinhole 11 may be at a distance from the joined first conductor 1 and the metal element 7. The rotating tool 5 may at some point along its route contact the first conductor 1, the metal element 7, and the metal fixture 3 simultaneously.

In a step d) excess metal fixture material of the metal fixture 3 is removed from the joined end section of the first conductor 1 and metal element 7 to obtain an FSW joint 13 between the first conductor 1 and the metal element 7, as shown in Fig. 1D. The weld nugget 15 obtained by the friction stir welding is an alloy of the material or materials of the metal fixture 3, the first conductor 1, and the metal element 7. Thus, for example if the metal fixture 3 is Al 6060, and the first conductor 1 and the metal element 7 are Al 1050, then the weld nugget 15 is an alloy of A1 6060 and Al 1050. The FSW joint 13 would thus obtain higher mechanical strength than if the metal fixture 3 would also be Al 1050. Other examples of suitable materials of the first conductor, the metal element, and/or the metal fixture, in any combination, are Al 1000 series, Al 6000 series or Al 8000 series, or copper or a copper alloy such as Cu-ETP, Cu-OF, CuZn, CuSn, CuSi, CuSiMn, CuSiNi, CuNiMn, CuCrZr, CuMiSiCr.

Step d) comprises removing the excess material by cutting, grinding, and polishing. For example, the majority of the metal fixture 3 may be removed by cutting when the FSW tool 5 has been raised from the metal fixture 3 after step c) has been completed. The cutting may be followed by grinding, and finally polishing of the weld nugget 15 and of the regions of the first conductor 1 and the metal element 7 close to the weld nugget 15.

In the example in Figs 1A-1D, an FSW conductor joint, in the form of the FSW joint 13, between the two power cables is thus obtained.

The FSW joint 13 may have an essentially cylindrical shape.

Fig. 2 shows a second example of joining the first conductor 1 with the metal element 7. The metal element 7 may in this example be a second conductor, as in the previous example. According to the example, prior to step a) holes may be drilled in an end section of the first conductor 1 and/or in the metal element 7, to be arranged in the metal fixture 3. The holes are filled with a filler material 17.

The filler material 17 may have a higher mechanical strength and/or higher electrical conductivity than a material of the first conductor 1.

The filler material 17 may have a higher mechanical strength and/or higher electrical conductivity than a material of the metal element 7.

The filler material 17 may for example be in the form of wires, plates, or a powder. The powder may comprise a metal powder, such as aluminium or copper, and carbon nanotubes or a metal powder, such as aluminium or copper, and graphene, for example. The metal powder may for example comprise Al 6060 in case the first conductor 1 and/or the metal element 7 comprises Al 1050. In case of wires or plates, these may comprise metal such as Al 6060 if the first conductor 1 and/or the metal element 7 comprises Al 1050. The metal fixture 3 may in examples with the filler material 17 be made of the same metal and same metal grade as the first conductor 1 and/or the metal element 7. Alternatively, the metal fixture 3 may be made of a different material than the first conductor 1 and/or the second metal 7. For example, the metal fixture 3 may be made of a metal with higher mechanical strength and/or higher electrical conductivity than the metal of which the first conductor 1 and/or the metal element 7 is made.

In other examples comprising the filler material 17, prior to step a) an end face of the end section of the first conductor 1 and an end face of the metal element 7 may be arranged spaced apart with a gap. The gap is then filled with the filler material 17.

In all examples comprising the filler material 17, the method proceeds with steps a), b) c, and d) as above. The weld nugget will thus form an alloy comprising the filler material 17.

Fig. 3A shows another example of the method. In this example, the metal element 7 is a second conductor of a second power cable. Furthermore, the first conductor 1 comprises a first material and the metal element 7 comprises a second material different from the first material. Both the first material and the second material are metals. The first material and the second material have different ampacity. For example, the first material may have a lower ampacity than the second material. The first material may for example be an aluminium grade, and the second material may be a copper grade. In this example, the metal fixture 3 comprises a first member 4a and a second member 4b. The first member 4a and the second member 4b are arranged adjacent to each other and directly contact each other. The first member 4a clamps the first conductor 1 and the second member 4b clamps the metal element 7. The first member 4a is weld compatible with the first material. The second member 4b is weld compatible with the second material. For example, the first material may be an aluminium grade, and the second material may be a copper grade. An end face of the metal element 7 may, if the metal element 7 is a copper grade, be plated with nickel mixed with carbon nanotubes and/or graphene nanoplatelets to facilitate joining with the first conductor 1. Both the first member 4a and the second member 4b may comprise a respective first clamping member 6 and a second clamping member 8. In step c) the rotating FSW tool 5 is moved along the metal fixture 3 along an interface at which the first member 4a contacts the second member 4b while penetrating the metal fixture 3. The rotating FSW tool 5 is moved towards and through an interface 9 between the end section of the first conductor 1 and the metal element 7. The end section of the first conductor 1 is thus joined with the first member 4a, and with the first and second members 4a, 4b. The FSW joint 13, shown in Fig. 3B, will thus contain the first material and the second material. Due to the lower ampacity of the first material than ampacity of the second material, the diameter of the first conductor 1 is larger than that of the metal element 7. Step d) may therefore involve shaping the FSW joint 13a to taper from having a diameter of the first conductor 1 to a diameter of the metal element 7.Figs 4A-4B show another example of an FSW joint 13b, somewhat similar to the example in Figs 3A-3B in the sense that two conductors made of different materials are joined. In this example, the first member 4a and the second member 4b are spaced apart from each other with respect to the longitudinal axis of the first conductor 1. Furthermore, the metal element 7 is in this case a connection piece, which is to be joined with a second conductor 19 of a second power cable. The first conductor 1, the metal element 7, and the second conductor 19 are arranged sequentially, with the first conductor 1 and a first end of the metal element 7 clamped by the first member 4a, and a second end of the metal element 7 and the second conductor clamped by the second member 4b. The metal element 7 is in this example bimetallic with the first end being made of the same material as the first conductor 1 and the second end being made of the same material as the second conductor 19. The metal element 7 may for example be prepared by friction welding a first piece of the first material and a second piece of the second material. In this example step b) involves the rotating FSW tool 5 penetrating the first member 4a and step c) involves moving the rotating FSW tool 5 along the interface between the first conductor 1 and the first end of the metal element 7 and then step b) and c) is repeated for the second member 4b, second end of the metal element 7 and the second conductor 19. Thus, the rotating FSW tool 5 penetrates the second member 4b and is moved along the interface between the second end of the metal element 7 and the second conductor 19. Step d) then involves removing excess metal fixture material from the joined end section of the first conductor 1 and the first end of the metal element 7 and removing the excess metal fixture material from the joined end section of the second conductor 19 and the second end of the metal element 7 to obtain an FSW joint between the first conductor 1, the metal element 7, and the second conductor 19. As in the example in Figs 3A-3B, the first conductor 1 and the first end of the metal element 7 may be made of a metal with a lower ampacity than the second end of the metal element 7 and the second conductor 19. Step d) may comprise shaping the FSW joint 13a to taper from having a diameter of the first conductor 1 to a diameter of the second conductor 19.

Fig. 5 schematically shows an example in which a conductor joint repair is made by means of FSW. Layers of a power cable with an existing damaged conductor joint 21 between the first conductor 1 and the metal element 7 in the form of a second conductor 19 covering the conductor joint 21 are first removed to expose the damaged conductor joint 21. The conductor joint 21 and end sections of the first conductor 1 and the second conductor 19 are then arranged in the metal fixture 3, i.e., step a) is performed. This is followed by steps c)-d) to repair the conductor joint 21 and obtain an FSW joint.

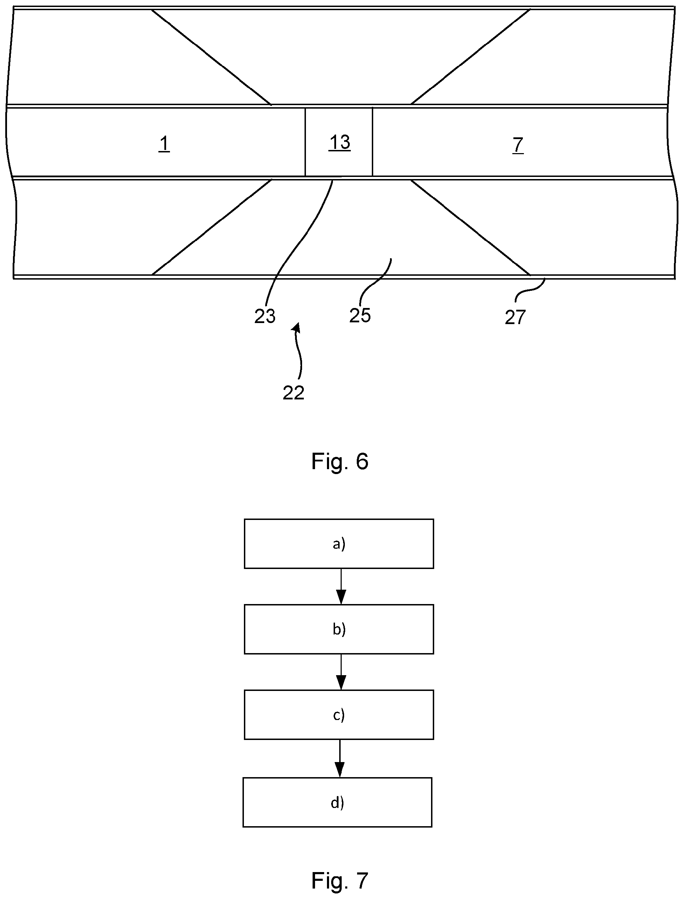

Fig. 6 shows an example of a power cable 22 comprising an FSW joint 13 obtained according to an example of the present method. After the FSW joint 13 has been made, additional layers are arranged around the FSW joint 13. These layers may be arranged around the FSW joint 13 by winding tapes and optionally curing the tape layers, or by moulding, for example. The layers include an inner semiconducting layer 23, an insulation layer 25 arranged around the inner semiconducting layer 23, and an outer semiconducting layer 27 arranged around the insulation layer 25.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of joining a first conductor (1) of a power cable (22) with an essentially cylindrical metal element (7), the method comprising:
a) arranging an end section of the first conductor (1) and a portion of the metal element (7) in a metal fixture (3),
b) penetrating the metal fixture (3) with a rotating friction stir welding, FSW, tool (5),
c) moving the rotating FSW tool (5), while penetrating the metal fixture (3), towards and through an interface (9) between the end section of the first conductor (1) and the metal element (7), joining the end section, the metal element (7), and the metal fixture (3), and
d) removing excess metal fixture material from the joined end section and metal element (7) to obtain an FSW joint (13) between the first conductor (1) and the metal element (7).

2. Method as claimed in claim 1, wherein in step d) the excess material is removed by cutting, grinding, and polishing.

3. Method as claimed in claim 1 or 2, wherein the FSW joint (13) has an essentially cylindrical shape.

4. Method as claimed in any of the preceding claims, wherein in step c) the FSW tool (5) moves through the interface in a direction that is at essentially a right angle with a longitudinal axis of the first conductor (1).

5. Method as claimed in any of the preceding claims, comprising prior to step d) raising the FSW tool (5) from the metal fixture (3) at a distance from the joined first conductor (1) and the metal element (7).

6. Method as claimed in any of the preceding claims, wherein the metal element (7) is a second conductor of a second power cable, and wherein the FSW joint (13) is an FSW conductor joint.

7. Method as claimed in any of the preceding claims, wherein the metal fixture (3) and the first conductor (1) are made of the same material.

8. Method as claimed in any of claims 1-6, wherein the metal fixture (3) comprises a different material of higher mechanical strength and/or higher electrical conductivity than the first conductor (1).

9. Method as claimed in any of claims 1-6, comprising prior to step a) drilling holes in the end section and filling the holes with a filler material (17).

10. Method as claimed in any of claims 1-6, comprising prior to step a) arranging an end face of the end section and an end face of the metal element (7) spaced apart with a gap, and filling the gap with a filler material (17).

11. Method as claimed in claim 9 or 10, wherein the filler material (17) has a higher mechanical strength and/or a higher electrical conductivity than a material of the first conductor (1).

12. Method as claimed in any of claims 1-6, wherein the first conductor (1) comprises a first material and the metal element (7) comprises a second material different from the first material.

13. Method as claimed in claim 12, wherein the metal fixture (3) comprises a first member (4a) that clamps the first conductor (1), and a second member that clamps the metal element (7), wherein the first member (4a) is made of a material that is welding compatible with the first material, and the second member (4b) is made of a material that is welding compatible with the second material.

14. Method as claimed in claim 12 or 13, wherein the first material is an aluminium grade, and the second material is a copper grade.

15. An FSW joint (13) obtainable by means of the method of any of the preceding claims.
